# EUROPÄISCHE PATENTSCHRIFT

(11) **EP 3 585 566 B1**
(45) Veröffentlichungstag und Bekanntmachung des Hinweises auf die Patenterteilung: **18.11.2020**
(21) Anmeldenummer: 18705644.5
(22) Anmeldetag: 19.02.2018
(51) Int. Cl.: B25C 1/18, B25B 23/04, B27F 7/13

(54) **VERFAHREN UND VORRICHTUNG ZUR VEREINZELUNG EINES BEFESTIGUNGSELEMENTS VON EINEM BEFESTIGUNGSELEMENTESTREIFEN**
METHOD AND DEVICE FOR SEPARATING A FASTENING ELEMENT FROM A FASTENING ELEMENT STRIP
PROCÉDÉ ET DISPOSITIF DESTINÉS À DÉSOLIDARISER UN ÉLÉMENT DE FIXATION D'UNE BANDE D'ÉLÉMENTS DE FIXATION

(30) Priorität: 23.02.2017 EP 17157526
(43) Veröffentlichungstag der Anmeldung: 01.01.2020
(73) Patentinhaber: Hilti Aktiengesellschaft, 9494 Schaan (LI)
(72) Erfinder: FOSER, Thomas, 9496 Balzers (LI); ZIEGLER, Stefan, 8854 Siebnen (CH)
(74) Vertreter: Hilti Aktiengesellschaft Corporate Intellectual Property
(86) Internationale Anmeldenummer: PCT/EP2018/053998
(87) Internationale Veröffentlichungsnummer: WO 2018/153805

(56) Entgegenhaltungen:
- DE-A1- 2 832 171
- DE-A1-102012 209 416
- GB-A- 1 316 672

## Beschreibung

Die Erfindung betrifft ein Verfahren gemäß dem Oberbegriff des Patentanspruchs 1 und eine Vorrichtung gemäß dem Oberbegriff des Patentanspruchs 10 zur Vereinzelung eines Befestigungselements von einem Befestigungselementestreifen mit einer Aufnahme, in welcher das Befestigungselement aufgenommen ist.

Befestigungselemente, wie beispielsweise Schrauben oder Nägel, die in einem Befestigungselementestreifen magaziniert sind, werden üblicherweise während des Eintreibvorgangs in einen Untergrund von dem Befestigungselementestreifen vereinzelt. Dabei treten unter Umständen Kippmomente auf, welche den Eintreibvorgang und damit auch die Befestigungsqualität beeinträchtigen.

Aus GB 1 316 672, die ein Verfahren gemäß dem Oberbegriff des Patentanspruchs 1 und eine Vorrichtung gemäß dem Oberbegriff des Patentanspruchs 10 offenbart, ist eine Eintreibvorrichtung für Befestigungselemente bekannt, in welcher die Befestigungselemente von einem Trägerstreifen vereinzelt werden, indem jedes Befestigungselement jeweils zunächst mit einem Eintreibelement in Eingriff kommt, dann mittels einer geneigten Führungsfläche von dem Trägerstreifen getrennt wird, und schliesslich von dem Eintreibelement in einen Untergrund eingetrieben wird.

Es ist eine Aufgabe der Erfindung, ein Verfahren und eine Vorrichtung zur Verfügung zu stellen, mit denen ein Befestigungselement auf einfache Weise von einem Befestigungselementestreifen vereinzelbar ist.

Die Aufgabe wird gelöst durch ein Verfahren gemäß dem Patentanspruch 1 zur Vereinzelung eines Befestigungselements von einem Befestigungselementestreifen mit einer Aufnahme, in welcher das Befestigungselement aufgenommen ist, wobei das Befestigungselement eine Befestigungsrichtung definiert, in welcher das Befestigungselement in einen Untergrund einzutreiben vorgesehen ist, wobei das Verfahren ein Transportieren des Befestigungselements in einer Transportrichtung, bis das Befestigungselement in einem Vereinzelungsabschnitt angeordnet ist, sowie ein Erzeugen einer Bewegung des Befestigungselements relativ zu der Aufnahme in einer Vereinzelungsrichtung, bis das Befestigungselement von der Aufnahme getrennt ist, umfasst. Ein Eintreibelement wird mit dem Befestigungselement in Eingriff gebracht, um das Befestigungselement in den Untergrund einzutreiben, nachdem das Befestigungselement von dem Befestigungselementestreifen vereinzelt wurde. Die Vereinzelungsrichtung ist dabei bevorzugt gegenüber der Befestigungsrichtung geneigt, besonders bevorzugt senkrecht zur Befestigungsrichtung orientiert.

Eine vorteilhafte Ausführungsform ist dadurch gekennzeichnet, dass die Vereinzelungsrichtung gegenüber der Transportrichtung geneigt, bevorzugt senkrecht zur Transportrichtung orientiert ist.

Eine vorteilhafte Ausführungsform ist dadurch gekennzeichnet, dass ein Vereinzelungselement mit einer Bewegungsrichtung bewegt wird, um die Bewegung des Befestigungselements relativ zu der Aufnahme zu erzeugen. Bevorzugt ist die Bewegungsrichtung gegenüber der Befestigungsrichtung geneigt, besonders bevorzugt senkrecht zur Befestigungsrichtung orientiert. Ebenfalls bevorzugt ist die Bewegungsrichtung parallel zur Vereinzelungsrichtung orientiert.

Eine vorteilhafte Ausführungsform ist dadurch gekennzeichnet, dass die Aufnahme eine Öffnung aufweist, und wobei ein Vereinzelungselement durch die Öffnung hindurchbewegt wird, um die Bewegung des Befestigungselements relativ zu der Aufnahme zu erzeugen. Eine vorteilhafte Ausführungsform ist dadurch gekennzeichnet, dass die Aufnahmen jeweils mit einem Schlitz versehen sind, welcher sich bevorzugt entlang der Befestigungsrichtung erstreckt, und welcher besonders bevorzugt in der Befestigungsrichtung durchgängig an der Aufnahme ausgebildet ist. Besonders bevorzugt wird während des Vereinzelungsvorgangs das Befestigungselement durch den Schlitz hindurch aus der Aufnahme herausgeschnappt. Eine vorteilhafte Ausführungsform ist dadurch gekennzeichnet, dass die Aufnahmen jeweils mit einer Sollbruchstelle versehen sind, welche sich bevorzugt entlang der Befestigungsrichtung erstreckt. Besonders bevorzugt wird während des Vereinzelungsvorgangs die Aufnahme an der Sollbruchstelle aufgebrochen und das Befestigungselement durch die dabei entstehende Bruchstelle hindurch aus der Aufnahme herausbewegt.

Die Aufgabe wird ebenfalls gelöst durch eine Vereinzelungsvorrichtung gemäß dem Patentanspruch 10 zur Vereinzelung eines Befestigungselements von einem Befestigungselementestreifen mit einer Aufnahme, in welcher das Befestigungselement aufgenommen ist, wobei das Befestigungselement eine Befestigungsrichtung definiert, in welcher das Befestigungselement in einen Untergrund einzutreiben vorgesehen ist, mit einem Transportkanal für einen Transport des Befestigungselementestreifens in einer Transportrichtung, wobei der Transportkanal einen Vereinzelungsabschnitt aufweist, und mit einem Vereinzelungselement, welches eine Wartestellung, in der das Vereinzelungselement vollständig ausserhalb des Transportkanals angeordnet ist, und eine Vereinzelungsstellung, in der das Vereinzelungselement in den Vereinzelungsabschnitt hineinragt, aufweist, wobei eine Bewegung des Vereinzelungselements von der Wartestellung in die Vereinzelungsstellung dazu geeignet ist, ein in dem Vereinzelungsabschnitt angeordnetes Befestigungselement relativ zu der Aufnahme in einer Vereinzelungsrichtung zu bewegen, um das Befestigungselement von der Aufnahme zu trennen. Die Vereinzelungsrichtung ist dabei gegenüber der Befestigungsrichtung geneigt, bevorzugt senkrecht zur Befestigungsrichtung orientiert.

Eine vorteilhafte Ausführungsform ist dadurch gekennzeichnet, dass die Vereinzelungsrichtung gegenüber der Transportrichtung geneigt, bevorzugt senkrecht zur Transportrichtung orientiert ist.

Ebenfalls vorteilhaft wird die Vereinzelungsvorrichtung in einen Magazinvorsatz für eine Eintreibvorrichtung zum Eintreiben von Befestigungselementen in einen Untergrund eingesetzt, mit einem Ansatzteil, welches einen Verbindungsbereich zum Verbinden des Magazinvorsatzes mit der Eintreibvorrichtung aufweist, und mit einem Anpressteil, welches einen Anlagebereich zum Anlegen des Magazinvorsatzes an den Untergrund aufweist, wobei das Ansatzteil und das Anpressteil entlang einem Verschiebeweg in einer Anpressrichtung verschiebbar aneinander gehalten sind, wobei der Verschiebeweg durch eine Normalstellung und eine Anpressstellung begrenzt ist.

Eine vorteilhafte Ausführungsform ist dadurch gekennzeichnet, dass das Anpressteil eine Aufnahme für ein Befestigungselement, einen Durchlass für ein an der Eintreibvorrichtung angebrachtes Eintreibelement, mit Hilfe dessen ein Befestigungselement in der Aufnahme in den Untergrund eintreibbar ist, und einen den Vereinzelungsabschnitt und die Aufnahme miteinander verbindenden Zuführkanal für die Zuführung eines in dem Vereinzelungsabschnitt vereinzelten Befestigungselements zur der Aufnahme aufweist.

Ein vorteilhaftes Befestigungssystem umfasst eine Eintreibvorrichtung zum Eintreiben von Befestigungselementen in einen Untergrund, bevorzugt eine Bohrmaschine oder einen Schrauber, und einen Magazinvorsatz wie beschrieben, wobei der Verbindungsbereich mit der Eintreibvorrichtung verbunden ist.

Bevorzugt umfasst das Befestigungselement eine Spitze und/oder einen Kopf. Das Befestigungselement ist bevorzugt mit einem Gewinde versehen und als Schraube ausgebildet. Bei alternativen Ausführungsformen ist das Befestigungselement als Nagel, Bolzen oder Ähnliches ausgebildet.

Nachfolgend werden bevorzugte Ausführungsbeispiele unter Bezugnahme auf die Zeichnungen näher erläutert. Es zeigen:
- Fig. 1: einen Magazinvorsatz mit einer Vereinzelungsvorrichtung in einer Querschnittsansicht,
- Fig. 2: den Magazinvorsatz mit der Vereinzelungsvorrichtung in einer weiteren Querschnittsansicht, und
- Fig. 3: den Magazinvorsatz mit der Vereinzelungsvorrichtung in einer Schrägansicht.

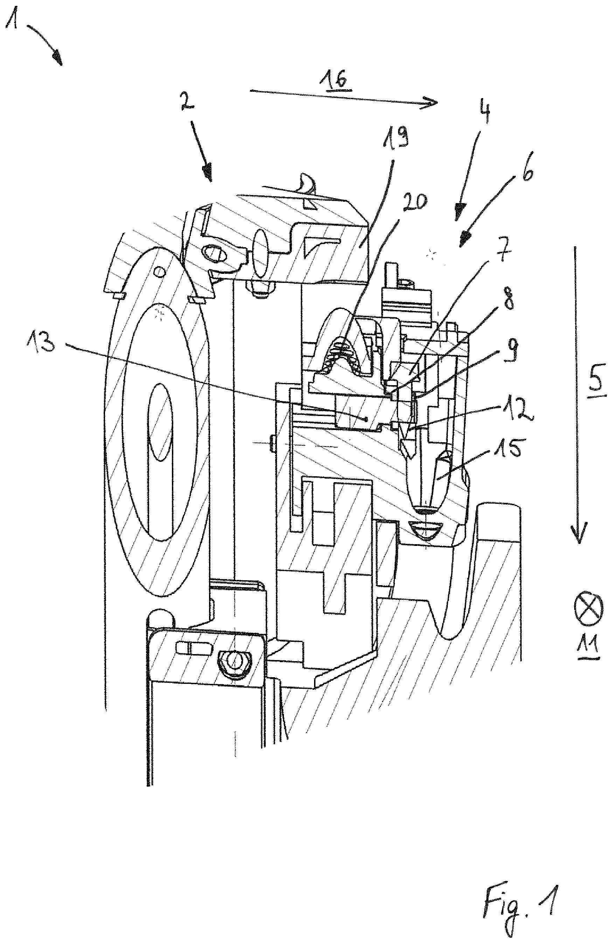

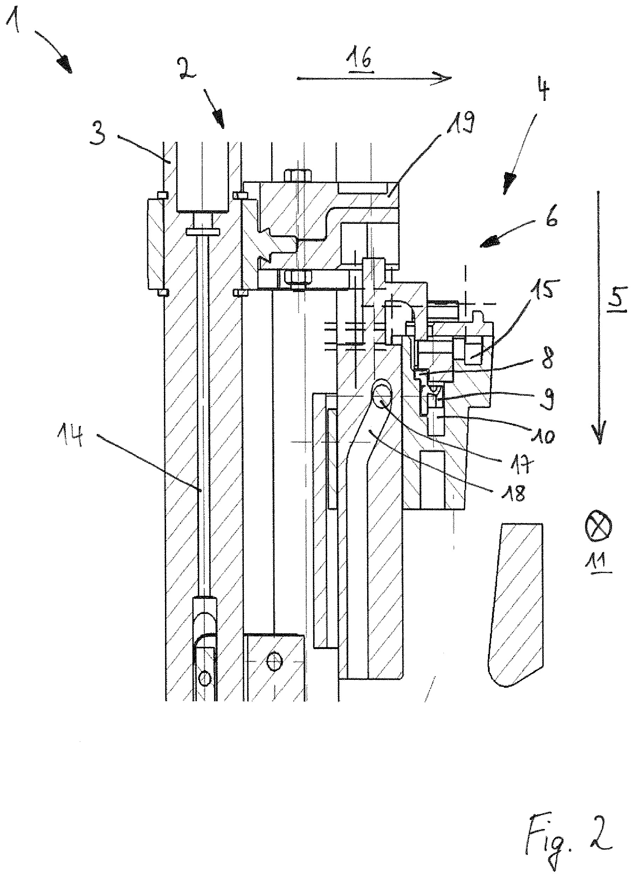

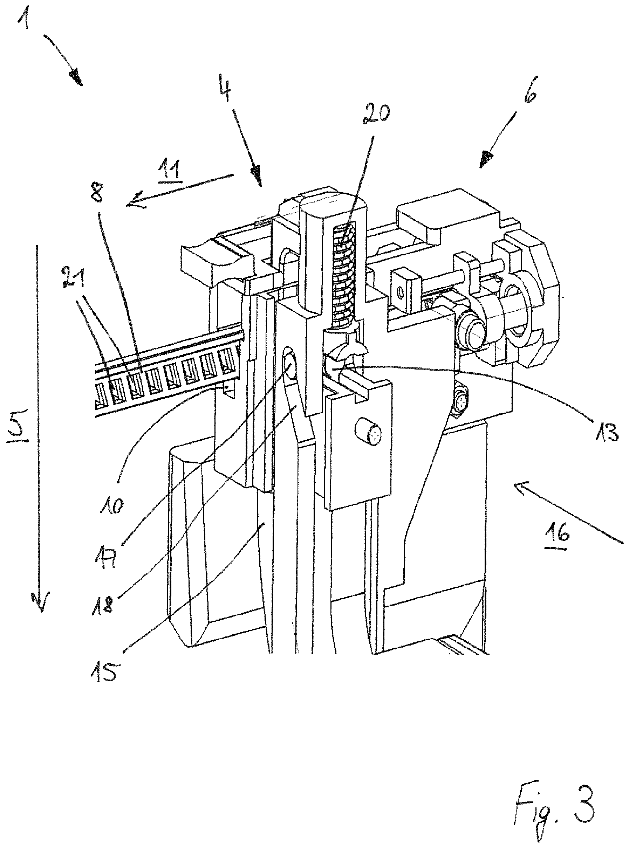

Die Fig. 1, 2 und 3 zeigen einen Magazinvorsatz 1 für eine nicht dargestellte Eintreibvorrichtung zum Eintreiben von Befestigungselementen in einen Untergrund. Der Magazinvorsatz 1 umfasst ein Ansatzteil 2, welches einen Verbindungsbereich 3 zum Verbinden des Magazinvorsatzes 1 mit einer Eintreibvorrichtung, wie beispielsweise einem Schrauber, aufweist, und ein Anpressteil 4, welches einen Anlagebereich zum Anlegen des Magazinvorsatzes 1 an den Untergrund aufweist. Das Ansatzteil und das Anpressteil sind entlang einem Verschiebeweg in einer Anpressrichtung 5 verschiebbar aneinandergehalten, wobei der Verschiebeweg durch eine Normalstellung und eine Anpressstellung begrenzt ist.

Der Magazinvorsatz 1 umfasst eine Vereinzelungsvorrichtung 6 zur Vereinzelung eines Befestigungselements 7 von einem Befestigungselementestreifen 8 mit einer Aufnahme 9, in welcher das Befestigungselement 7 so aufgenommen ist, dass es eine Befestigungsrichtung definiert, welche mit der Anpressrichtung 5 identisch ist und in welcher das Befestigungselement 7 in einen Untergrund einzutreiben vorgesehen ist. Die Vereinzelungsvorrichtung 6 umfasst einen Transportkanal 10 für einen Transport des Befestigungselementestreifens 8 in einer Transportrichtung 11. Der Transportkanal 10 weist einen Vereinzelungsabschnitt 12 auf. Weiterhin umfasst die Vereinzelungsvorrichtung 6 ein Vereinzelungselement 13, welches eine Wartestellung, in der das Vereinzelungselement 13 vollständig ausserhalb des Transportkanals 10 angeordnet ist, und eine in den Fig. 1, 2 und 3 dargestellte Vereinzelungsstellung, in der das Vereinzelungselement 13 in den Vereinzelungsabschnitt 12 hineinragt, aufweist.

Das Anpressteil 4 weist eine nicht dargestellte Aufnahme für das Befestigungselement 7, einen Durchlass 14 für ein an der Eintreibvorrichtung angebrachtes Eintreibelement, beispielsweise einen Schraubenbit, mit Hilfe dessen das Befestigungselement 7 in der Aufnahme in den Untergrund eintreibbar ist, und einen den Vereinzelungsabschnitt 12 und die Aufnahme miteinander verbindenden Zuführkanal 15 für die Zuführung des in dem Vereinzelungsabschnitt 12 vereinzelten Befestigungselements 7 zur der Aufnahme auf.

Zur Vereinzelung wird nun das Befestigungselement 7 zunächst in der Transportrichtung 11 durch den Transportkanal 10 bis zu dem Vereinzelungsabschnitt 12 transportiert. Ein Anpressen des Magazinvorsatzes 1 an den Untergrund bewirkt eine Verschiebung des Anpressteils 4 gegenüber dem Ansatzteil 2 in der Anpressrichtung 5. Dabei läuft ein von dem Vereinzelungselement 13 abragendes Steuerelement 17 in einer Steuernut 18 des Anpressteils 4, wodurch eine Bewegung des Vereinzelungselements 13 in einer Bewegungsrichtung von der Wartestellung in die Vereinzelungsstellung bewirkt wird. Die Bewegungsrichtung ist senkrecht zur Befestigungsrichtung orientiert. Die Bewegung der Steuernut 18 relativ zum Anpressteil 4 wird durch ein an dem Ansatzteil 2 angebrachtes Betätigungselement 19 gegen die Kraft einer Gegenfeder 20 herbeigeführt.

Die Bewegung des Vereinzelungselements 13 führt dazu, das in dem Vereinzelungsabschnitt 12 angeordnete Befestigungselement 7 relativ zu der Aufnahme 9 in einer Vereinzelungsrichtung 16 zu bewegen, um das Befestigungselement 7 von der Aufnahme 9 zu trennen. Das Vereinzelungselement 13 wird dazu durch eine Öffnung 21 an dem Befestigungselementestreifen 8 bewegt. Die Vereinzelungsrichtung 16 ist dabei senkrecht zur Anpressrichtung 5, also auch senkrecht zur Befestigungsrichtung und parallel zur Bewegungsrichtung des Vereinzelungselements 13, sowie auch senkrecht zur Transportrichtung 11 orientiert. Das vereinzelte Befestigungselement 7 fällt dann aufgrund der Schwerkraft durch den beispielsweise als Fallrohr ausgebildeten Zuführkanal 15 bis zu der Aufnahme, von der aus es in den Untergrund eingetrieben wird.

Die vorliegende Erfindung wurde am Beispiel eines Verfahrens und einer Vorrichtung zur Vereinzelung eines Befestigungselements von einem Befestigungselementestreifen dargestellt. Es wird jedoch darauf hingewiesen, dass das erfindungsgemässe Verfahren und die erfindungsgemässe Vorrichtung auch für andere Anwendungszwecke geeignet sind.

## Patentansprüche

1. Verfahren zur Vereinzelung eines Befestigungselements (7) von einem Befestigungselementestreifen (8) mit einer Aufnahme (9), in welcher das Befestigungselement (7) aufgenommen ist, wobei das Befestigungselement eine Befestigungsrichtung definiert, in welcher das Befestigungselement in einen Untergrund einzutreiben vorgesehen ist, wobei das Verfahren folgende Schritte umfasst:
a) Transportieren des Befestigungselements in einer Transportrichtung, bis das Befestigungselement in einem Vereinzelungsabschnitt (12) angeordnet ist,
b) Erzeugen einer Bewegung des Befestigungselements relativ zu der Aufnahme (9) in einer Vereinzelungsrichtung, bis das Befestigungselement von der Aufnahme getrennt ist,
**dadurch gekennzeichnet, dass** ein Eintreibelement mit dem Befestigungselement in Eingriff gebracht wird, um das Befestigungselement in den Untergrund einzutreiben, nachdem das Befestigungselement von dem Befestigungselementestreifen (8) vereinzelt wurde.

2. Verfahren nach Anspruch 1, wobei die Vereinzelungsrichtung gegenüber der Befestigungsrichtung geneigt, insbesondere senkrecht zur Befestigungsrichtung orientiert, ist.

3. Verfahren nach einem der vorhergehenden Ansprüche, wobei die Vereinzelungsrichtung gegenüber der Transportrichtung geneigt ist.

4. Verfahren nach Anspruch 3, wobei die Vereinzelungsrichtung senkrecht zur Transportrichtung orientiert ist.

5. Verfahren nach einem der vorhergehenden Ansprüche, wobei die Aufnahme (9) eine Öffnung (21) aufweist, und wobei ein Vereinzelungselement (13) durch die Öffnung hindurch bewegt wird, um die Bewegung des Befestigungselements relativ zu der Aufnahme zu erzeugen.

6. Verfahren nach einem der vorhergehenden Ansprüche, wobei die Aufnahme (9) mit einem Schlitz versehen ist, welcher sich insbesondere entlang der Befestigungsrichtung erstreckt, und welcher insbesondere in der Befestigungsrichtung durchgängig an der Aufnahme ausgebildet ist.

7. Verfahren nach Anspruch 6, wobei während Schritt b) das Befestigungselement durch den Schlitz hindurch aus der Aufnahme (9) herausgeschnappt wird.

8. Verfahren nach einem der vorhergehenden Ansprüche, wobei die Aufnahme (9) mit einer Sollbruchstelle versehen ist, welche sich insbesondere entlang der Befestigungsrichtung erstreckt.

9. Verfahren nach Anspruch 8, wobei während Schritt b) die Aufnahme an der Sollbruchstelle aufgebrochen und das Befestigungselement durch die dabei entstehende Bruchstelle hindurch aus der Aufnahme herausbewegt wird.

10. Vereinzelungsvorrichtung (6) zur Vereinzelung eines Befestigungselements (7) von einem Befestigungselementestreifen (8) mit einer Aufnahme (9), in welcher das Befestigungselement aufgenommen ist, wobei das Befestigungselement eine Befestigungsrichtung definiert, in welcher das Befestigungselement in einen Untergrund einzutreiben vorgesehen ist, und mit einem Transportkanal (10) für einen Transport des Befestigungselementestreifens (8) in einer Transportrichtung, wobei der Transportkanal (10) einen Vereinzelungsabschnitt (12) aufweist,
**dadurch gekennzeichnet, dass** die Vereinzelungsvorrichtung (6) ein Vereinzelungselement (13) aufweist, welches eine Wartestellung, in der das Vereinzelungselement vollständig ausserhalb des Transportkanals (10) angeordnet ist, und eine Vereinzelungsstellung, in der das Vereinzelungselement (13) in den Vereinzelungsabschnitt (12) hineinragt, aufweist, wobei eine Bewegung des Vereinzelungselements (13) von der Wartestellung in die Vereinzelungsstellung dazu geeignet ist, ein in dem Vereinzelungsabschnitt (12) angeordnetes Befestigungselement (7) relativ zu der Aufnahme (9) in einer Vereinzelungsrichtung (16) zu bewegen, um das Befestigungselement (7) von der Aufnahme zu trennen, wobei die Vereinzelungsrichtung (16) gegenüber der Befestigungsrichtung geneigt ist.

11. Vereinzelungsvorrichtung nach Anspruch 10, wobei die Vereinzelungsrichtung senkrecht zur Befestigungsrichtung orientiert ist.

12. Vereinzelungsvorrichtung nach einem der Ansprüche 10 und 11, wobei die Vereinzelungsrichtung gegenüber der Transportrichtung geneigt, insbesondere senkrecht zur Transportrichtung orientiert, ist.

13. Magazinvorsatz (1) für eine Eintreibvorrichtung zum Eintreiben von Befestigungselementen in einen Untergrund, mit einem Ansatzteil (2) welches einen Verbindungsbereich (3) zum Verbinden des Magazinvorsatzes mit der Eintreibvorrichtung aufweist, und mit einem Anpressteil (4), welches einen Anlagebereich zum Anlegen des Magazinvorsatzes an den Untergrund aufweist, wobei das Ansatzteil (2) und das Anpressteil (4) entlang einem Verschiebeweg in einer Anpressrichtung verschiebbar aneinander gehalten sind, wobei der Verschiebeweg durch eine Normalstellung und eine Anpressstellung begrenzt ist, und wobei der Magazinvorsatz eine Vereinzelungsvorrichtung (6) nach einem der Ansprüche 10 bis 12 umfasst.

14. Magazinvorsatz nach Anspruch 13, wobei das Anpressteil (4) eine Aufnahme für ein Befestigungselement, einen Durchlass (14) für ein an der Eintreibvorrichtung angebrachtes Eintreibelement, mit Hilfe dessen ein Befestigungselement in der Aufnahme in den Untergrund eintreibbar ist, und einen den Vereinzelungsabschnitt (12) und die Aufnahme miteinander verbindenden Zuführkanal (15) für die Zuführung eines in dem Vereinzelungsabschnitt vereinzelten Befestigungselements zur der Aufnahme aufweist.

15. Befestigungssystem, umfassend eine Eintreibvorrichtung zum Eintreiben von Befestigungselementen (7) in einen Untergrund, insbesondere Bohrmaschine oder Schrauber, und einen Magazinvorsatz (1) nach einem der Ansprüche 13 und 14, wobei der Verbindungsbereich (3) mit der Eintreibvorrichtung verbunden ist.

## Claims

1. Method for separating a fastening element (7) from a fastening element strip (8) having a receptacle (9) in which the fastening element (7) is received, wherein the fastening element defines a fastening direction in which the fastening element is provided to be driven into a substrate, wherein the method comprises the following steps:
a) transporting the fastening element in a transport direction until the fastening element is arranged in a separating section (12),
b) producing a movement of the fastening element relative to the receptacle (9) in a separating direction until the fastening element is separated from the receptacle, **characterized in that** a driving element is brought into engagement with the fastening element in order to drive the fastening element into the substrate after the fastening element has been separated from the fastening element strip (8).

2. Method according to Claim 1, wherein the separating direction is inclined in relation to the fastening direction, in particular oriented perpendicular to the fastening direction.

3. Method according to either of the preceding claims, wherein the separating direction is inclined in relation to the transport direction.

4. Method according to Claim 3, wherein the separating direction is oriented perpendicular to the transport direction.

5. Method according to one of the preceding claims, wherein the receptacle (9) has an opening (21), and wherein a separating element (13) is moved through the opening in order to produce the movement of the fastening element relative to the receptacle.

6. Method according to one of the preceding claims, wherein the receptacle (9) is provided with a slot which extends in particular along the fastening direction and which is formed on the receptacle in particular so as to be continuous in the fastening direction.

7. Method according to Claim 6, wherein, during step b), the fastening element is mapped out of the receptacle (9) through the slot.

8. Method according to one of the preceding claims, wherein the receptacle (9) is provided with a predetermined breaking point which extends in particular along the fastening direction.

9. Method according to Claim 8, wherein, during step b), the receptacle is broken open at the predetermined breaking point and the fastening element is moved out of the receptacle through the resulting point of breakage.

10. Separating device (6) for separating a fastening element (7) from a fastening element strip (8) having a receptacle (9) in which the fastening element is received, wherein the fastening element defines a fastening direction in which the fastening element is provided to be driven into a substrate, and with a transport channel (10) for transporting the fastening element strip (8) in a transport direction, wherein the transport channel (10) has a separating section (12), **characterized in that** the separating device (6) has a separating element (13) which has a waiting position, in which the separating element is arranged completely outside the transport channel (10), and a separating position, in which the separating element (13) projects into the separating section (12), wherein a movement of the separating element (13) from the waiting position into the separating position is suitable for moving a fastening element (7), which is arranged in the separating section (12), relative to the receptacle (9) in a separating direction (16) in order to separate the fastening element (7) from the receptacle, wherein the separating direction (16) is inclined in relation to the fastening direction.

11. Separating device according to Claim 10, wherein the separating direction is oriented perpendicular to the fastening direction.

12. Separating device according to either of Claims 10 and 11, wherein the separating direction is inclined in relation to the transport direction, in particular oriented perpendicular to the transport direction.

13. Magazine attachment (1) for a driving device for driving fastening elements into a substrate, having an add-on part (2), which has a connecting region (3) for connecting the magazine attachment to the driving device, and having a contact pressure part (4), which has a contact region for placing the magazine attachment against the substrate, wherein the add-on part (2) and the contact pressure part (4) are held against one another so as to be movable along a path of movement in a contact pressure direction, wherein the path of movement is bounded by a normal position and a contact pressure position, and wherein the magazine attachment comprises a separating device (6) according to one of Claims 10 to 12.

14. Magazine attachment according to Claim 13, wherein the contact pressure part (4) has a receptacle for a fastening element, a passage (14) for a driving element, which is mounted on the driving device and by means of which a fastening element in the receptacle can be driven into the substrate, and a feed channel (15), which connects the separating section (12) and the receptacle to one another, for feeding a fastening element separated in the separating section to the receptacle.

15. Fastening system comprising a driving device for driving fastening elements (7) into a substrate, in particular a power drill or screwdriver, and a magazine attachment (1) according to either of Claims 13 and 14, wherein the connecting region (3) is connected to the driving device.

## Revendications

1. Procédé de séparation d'un élément de fixation (7) d'une bande d'éléments de fixation (8) pourvue d'un logement (9) dans lequel l'élément de fixation (7) est reçu, l'élément de fixation définissant une direction de fixation dans laquelle l'élément de fixation est destiné à être enfoncé dans un substrat, le procédé comprenant les étapes suivantes :
a) transporter l'élément de fixation dans une direction de transport jusqu'à ce que l'élément de fixation soit disposé dans une portion de séparation (12),
b) générer un déplacement de l'élément de fixation par rapport au logement (9) dans une direction de séparation jusqu'à ce que l'élément de fixation soit séparé du logement,
**caractérisé en ce qu'**un élément d'enfoncement est amené en engagement avec l'élément de fixation pour enfoncer l'élément de fixation dans le substrat après que l'élément de fixation a été séparé de la bande d'éléments de fixation (8).

2. Procédé selon la revendication 1, la direction de séparation étant inclinée par rapport à la direction de fixation, en particulier orientée perpendiculairement à la direction de fixation.

3. Procédé selon l'une des revendications précédentes, la direction de séparation étant inclinée par rapport à la direction de transport.

4. Procédé selon la revendication 3, la direction de séparation étant orientée perpendiculairement à la direction de transport.

5. Procédé selon l'une des revendications précédentes, le logement (9) comportant une ouverture (21), et un élément de séparation (13) étant déplacé à travers l'ouverture afin de générer le déplacement de l'élément de fixation par rapport au logement.

6. Procédé selon l'une des revendications précédentes, le logement (9) étant pourvu d'une fente qui s'étend notamment le long de la direction de fixation et qui est formée de manière continue au niveau du logement en particulier dans la direction de fixation.

7. Procédé selon la revendication 6, au cours de l'étape b), l'élément de fixation étant sorti du logement (9) par la fente.

8. Procédé selon l'une des revendications précédentes, le logement (9) étant pourvu d'un point destiné à la rupture qui s'étend notamment le long de la direction de fixation.

9. Procédé selon la revendication 8, au cours de l'étape b), le logement étant ouvert au niveau du point destiné à la rupture et l'élément de fixation étant sorti du logement par le point généré destiné à la rupture.

10. Dispositif de séparation (6) destiné à séparer un élément de fixation (7) d'une bande d'éléments de fixation (8) pourvue d'un logement (9) dans lequel l'élément de fixation est reçu, l'élément de fixation définissant une direction de fixation dans laquelle l'élément de fixation est destiné à être enfoncé dans un substrat, et comprenant un conduit de transport (10) destiné à transporter la bande d'éléments de fixation (8) dans une direction de transport, le conduit de transport (10) comportant une portion de séparation (12),
**caractérisé en ce que** le dispositif de séparation (6) comporte un élément de séparation (13) qui présente une position d'attente, dans laquelle l'élément de séparation est disposé entièrement à l'extérieur du conduit de transport (10), et une position de séparation dans laquelle l'élément de séparation (13) fait saillie dans la portion de séparation (12), un déplacement de l'élément de séparation (13) de la position d'attente à la position de séparation étant adapté pour déplacer un élément de fixation (7), disposé dans la portion de séparation (12), par rapport au logement (9) dans une direction de séparation (16) afin de séparer l'élément de fixation (7) du logement, la direction de séparation (16) étant inclinée par rapport à la direction de fixation.

11. Dispositif de séparation selon la revendication 10, la direction de séparation étant orientée perpendiculairement à la direction de fixation.

12. Dispositif de séparation selon l'une des revendications 10 et 11, la direction de séparation étant inclinée par rapport à la direction de transport, en particulier orientée perpendiculairement à la direction de transport.

13. Adaptateur de magasin (1) destiné à un dispositif d'enfoncement destiné à enfoncer des éléments de fixation dans un substrat, ledit adaptateur comprenant un appendice (2) qui comporte une zone de liaison (3) destinée à relier l'adaptateur de magasin au dispositif d'enfoncement, et un élément de pression (4) qui comporte une zone d'appui permettant d'amener l'adaptateur de magasin en appui sur le substrat, l'appendice (2) et l'élément de pression (4) étant maintenus ensemble de manière à pouvoir coulisser le long d'un trajet de coulissement dans une direction de pression, le trajet de coulissement étant limité par une position normale et une position de pression, et l'adaptateur de magasin comprenant un dispositif de séparation (6) selon l'une des revendications 10 à 12.

14. Adaptateur de magasin selon la revendication 13, l'élément de pression (4) comportant un logement destiné à un élément de fixation, un passage (14) destiné à un élément d'enfoncement qui est fixé au dispositif d'enfoncement et à l'aide duquel un élément de fixation peut être enfoncé dans le logement ménagé dans le substrat, et un conduit d'acheminement (15) reliant la portion de séparation (12) et le logement l'un à l'autre et destiné à acheminer un élément de fixation, séparé dans la portion de séparation, au logement.

15. Système de fixation, comprenant un dispositif d'enfoncement destiné à enfoncer des éléments de fixation (7) dans un substrat, en particulier une perceuse ou un tournevis, et un adaptateur de magasin (1) selon l'une des revendications 13 et 14, la zone de liaison (3) étant reliée au dispositif d'enfoncement.
